# EUROPÄISCHE PATENTSCHRIFT

(11) **EP 3 154 764 B1**
(45) Veröffentlichungstag und Bekanntmachung des Hinweises auf die Patenterteilung: **13.11.2019**
(21) Anmeldenummer: 15736377.1
(22) Anmeldetag: 04.05.2015
(51) Int. Cl.: B29C 45/14, B23K 26/00, B23K 26/082, B23K 26/352, B23K 26/0622, B29K 705/02, B29K 705/12, B23K 103/04, B23K 103/10, B29L 31/30, B29K 705/00

(54) **VERFAHREN ZUM HERSTELLEN EINES WERKSTOFFVERBUNDES AUS METALL UND KUNSTSTOFF ZU EINEM KUNSTSTOFF-METALL-HYBRIDBAUTEIL**
METHOD FOR PRODUCING A MATERIAL COMPOSITE COMPOSED OF METAL AND PLASTIC TO FORM A PLASTIC-METAL HYBRID COMPONENT
PROCÉDÉ DE FABRICATION D'UN COMPOSITE DE MÉTAL ET DE MATIÈRE PLASTIQUE POUR FORMER UN COMPOSANT HYBRIDE PLASTIQUE/MÉTAL

(30) Priorität: 11.06.2014 DE 102014008815
(43) Veröffentlichungstag der Anmeldung: 19.04.2017
(73) Patentinhaber: Audi AG, 85045 Ingolstadt (DE); BASF SE, 67056 Ludwigshafen am Rhein (DE); SABIC Innovative Plastics B.V., 4612 PX Bergen Op Zoom (NL); TRUMPF Laser- und Systemtechnik GmbH, 71254 Ditzingen (DE)
(72) Erfinder: KOSE, Kim, 13437 Berlin (DE); OHNIMUS, Stephan, 12161 Berlin (DE); MINKOW, Michael, 13593 Berlin (DE); OTT, Harald, 25469 Halstenbek (DE); NÄCK, Alexander, 97320 Mainstockheim (DE); GAUGLER, Jan, 74855 Haßersheim (DE); KLINK, Holger, 64367 Mühltal (DE); EGGERS, Fred, 21614 Buxtehude (DE); HOFFMANN, Leo, 90766 Fürth (DE); DOGGEN, Gerardus, Johannes, Cornelis, 4756 BP Kruisland (NL); FAISST, Birgit, 70563 Stuttgart (DE)
(74) Vertreter: Hoffmann, Klaus-Dieter
(86) Internationale Anmeldenummer: PCT/DE2015/000217
(87) Internationale Veröffentlichungsnummer: WO 2015/188798

(56) Entgegenhaltungen:
- DE-A1- 10 024 224
- DE-A1-102006 004 769
- DE-A1-102011 010 997
- JP-A- 2014 051 041
- US-A1- 2008 070 001
- US-A1- 2012 094 108

## Beschreibung

Die Erfindung betrifft ein Verfahren zum Herstellen eines Werkstoffverbundes aus Metall und Kunststoff zu einem Kunststoff-Metall-Hybridbauteil.

Bei einem derartigen aus der JP 2014-051041 A bekannten Verfahren werden zur Haftverbesserung von Metalloberfläche und mindestens einer Kunststoffkomponente in einem ersten Verfahrensschritt in die Metalloberfläche zu deren Aufrauhung mittels Kurzpulslaserstrahlung makroskopische und/oder mikroskopische hinterschnittartige Schlitze eingebracht, deren konkavartiger Öffnungsbereich in der Draufsicht sowie deren Längsschnitt jeweils eine sich wiederholende, geometrisch genau definierte Form aufweisen sollen. Hierbei werden für den Öffnungsbereich der in die Metalloberfläche einzubringenden Schlitze in dessen Draufsicht definierte, sich stets wiederholende Formen wie Kreisform, Form eines Blattes eines Ginkgobaums, Bumerangform, Ellipsenform, Quadratform, Polygonform oder dgl, sowie für den Längsschnitt der Schlitze Dreiecksform, Vierecksform oder Trapezform vorgegeben. Der konkav geformte Öffnungsbereich jedes Schlitzes kann so ausgebildet sein, dass eine Vielzahl konkav geformter Öffnungsteile, die regelmäßig oder wahllos angeordnet sind, den konkav geformten Öffnungsbereich des Schlitzes bilden. In einem zweiten Verfahrensschritt werden dann in einem Spritzgussprozess die in der Metalloberfläche derart genau ausgeformten Schlitze mit der mindestens einen Kunststoffkomponente zumindest teilweise so gefüllt, dass eine verbesserte Haftung zwischen letzterer und den Schlitzen in der Metalloberfläche erreicht wird.

Aus der DE 10 2011 100 449.5 A1 ist zudem ein Verfahren zum Herstellen eines Verbundkörpers aus mindestens einem vorzufertigenden Metallbauteil und mindestens einem Kunststoffbauteil bekannt, bei dem für eine Oberfläche des Metallbauteils, die an dem Kunststoffbauteil in Anlage zu bringen und in der eine Verzahnungsanordnung mit einer Vielzahl im Abstand zueinander angeordneter Verzahnungselemente einzuprägen ist sowie aus der die einzelnen Verzahnungselemente anschließend jeweils um eine Biegekante aus der Oberfläche des Metallbauteils je ein Eingriffselement bildend heraus zu biegen sind, zunächst das Profil der einzelnen aus der Oberfläche des Metallbauteils heraus zu biegenden Verzahnungselemente der Verzahnungsanordnung und/oder deren Anzahl und/oder deren Verteilung innerhalb der Verzahnungsanordnung und/oder deren Lage im Raum (x, y, z Koordinaten) und/oder deren Fläche und/oder deren Oberflächenstruktur und/oder -rauigkeit kraftflussorientiert entsprechend der vorauszuberechnenden statischen und/oder dynamischen auf den Verbundkörper einwirkenden Kräfte an jeder formschlüssig herzustellenden Verbindung des Verbundkörpers mittels numerischer Simulation bestimmt wird, dann die Vielzahl der Verzahnungselemente der Verzahnungsanordnung entsprechend der numerischen Simulation profiliert, zueinander im Abstand angeordnet und ausgerichtet in der Oberfläche des Metallbauteils eingeprägt wird, darauf jedes Verzahnungselement um die Biegekante aus der Oberfläche des Metallbauteils in seine mittels der numerischen Simulation vorausbestimmte kraftflussorientierte Lage im Raum heraus gebogen wird, und dann das Metallbauteil mit dem Kunststoffbauteil formschlüssig zu dem Verbundkörper verbunden wird. Anschließend wird das Metallbauteil, aus dem die Vielzahl der Verzahnungselemente der Verzahnungsanordnung heraus gebogen ist, in einem Spritzgusswerkzeug fixiert und in das Kunststoffbauteil des Verbundkörpers in einem Standard-Spritzgussverfahren an die Oberfläche des Metallbauteils, aus der die Vielzahl der Verzahnungselemente heraus gebogen ist, angespritzt, wobei jedes Verzahnungselement der Verzahnungsanordnung im Kunststoff des an das Metallbauteil angespritzten Kunststoffbauteils in seiner mittels der numerischen Simulation vorausbestimmten kraftflussorientierten Lage im Raum eingebettet und bei Erstarren des Kunststoffs des Kunststoffbauteils in diesem fest verankert wird.

In der DE 10 2007 023 418 B4 ist ein Verfahren zum Aufrauen von Bauteiloberflächen, insbesondere aus Metall, Kunststoff oder Keramik zur Haftverbesserung von hierauf thermisch aufzutragenden thermischen Spritzschichten beschrieben, indem die Oberfläche unter Bildung von mikroskopischen Hinterschnitten aufgeraut wird, wobei die Oberfläche mittels gepulster Laserstrahlen mit Neigungswinkeln im Bereich von 20° bis 80° schräg verlaufende Formtaschen eingebracht werden, die so dimensioniert sind, dass mindestens eine der Kanten der Formtaschen einen Hinterschnitt in Bezug zur Metalloberfläche bildet, wobei die Oberfläche zumindest bereichsweise mehrfach mit gepulsten Laserstrahlen behandelt wird, die andere Richtungswinkel, Neigungswinkel und/oder andere Laserenergien aufweisen. Als vorteilhaft für die Qualität der Beschichtung wird dort beschrieben, dass der Spritzstrahl mit derselben Neigung wie die Formtaschen über die Oberfläche geführt werden soll. Hierzu sollen die Formtaschen gleichsinnig parallel mit lediglich einer in Bezug auf die Oberfläche hinterschnittenen Kante ausgebildet sein. Ein passender, geeigneter Winkel des Spritzstrahls muss daher umso genauer definiert werden, je tiefer die Formtaschen sind. Die Toleranzen der Winkeleinstellung nehmen entsprechend ab. Ein nicht geeignet gewählter Spritzstrahl kann daher zur unvollständigen Füllung der Formtaschen führen, was die Haftungsfestigkeit der Spritzschicht negativ beeinflusst bzw. verringert.

Aus der DE 10 2006 004 769 A1 geht weiterhin ein Verfahren zum Aufrauen von Metalloberflächen zur Haftverbesserung von hierauf thermisch gespritzten Schichten als bekannt hervor. Hierbei werden in einem ersten Verfahrensschritt in einer materialabhebenden oder materialabtragenden Behandlung Ausnehmungen oder Vertiefungen in die Oberfläche eingebracht, so dass das überstehende Metall der Oberfläche erhabene Mikrostrukturen, insbesondere Vorsprünge, Rillen, Ausstülpungen oder Ausbuchtungen, bildet, wobei diese Mikrostrukturen in mindestens einem zweiten Verfahrensschritt in der Weise verformend und/oder brechend nachbearbeitet werden, dass ein wesentlicher Anteil der Strukturen Hinterschnitte bezüglich der Oberfläche ausbildet.

In der DE 10 2008 040 782 A1 wird ferner ein Verfahren zum Herstellen eines Bauteilverbundes, insbesondere für Kraftfahrzeuganwendungen als bekannt offenbart, umfassend mindestens ein erstes Bauteil mit einer ersten Kontaktoberfläche und mindestens ein zweites Bauteil mit einer an der ersten Kontaktoberfläche anliegenden zweiten Kontaktoberfläche, bei dem auf der erste Kontaktoberfläche des ersten Bauteils mittels eines Lasers eine Oberflächenstruktur derart erzeugt wird, dass diese eine von einer Nanostruktur überlagerte Mikrostruktur aufweist. Nach der Oberflächenstrukturierung der ersten Kontaktoberfläche des ersten Bauteils wird dieses mit dem zweiten Bauteil, das aus Kunststoffmaterial, insbesondere aus einem thermoplastischen Material ausgebildet ist, durch zumindest abschnittweises Umspritzen des ersten Bauteils mit dem zweiten Bauteil formschlüssig verbunden.

Aus der DE 10 2011 111 745 A1 geht weiterhin ein aus einem Metall-Kunststoff-Hybrid-Verbund bestehendes Steuergehäusemodul für eine Verbrennungskraftmaschine als bekannt hervor, der zumindest einen Metall-Einleger aufweist, wobei die Rippenstruktur aus angespritzten Verstärkungsrippen aus einem thermoplastischen Kunststoff besteht, der Kurzfasern aus einem Verstärkungsmaterial mit einem Volumenanteil von zumindest 305 umfasst.

Aus der US 2008/0070001 A1 ist ein Verfahren zum Herstellen eines u.a. Kunststoff-Metall-Hybridbauteils bekannt, bei dem die Aufrauung der Metalloberfläche durch Ätzen, Sandstrahlen und/oder Laserbehandlung unter Bildung von Mikro-Löchern erfolgt, die nach Positionieren des metallischen Einlegers in ein Spritzgusswerkzeug durch Spritzgießen mit Kunststoff gefüllt werden.

Aus der DE 10 2011 010 997 A1 ist ferner ein Verfahren zum Herstellen eines Verbundbauteils bekannt, bei welchem ein metallisches Hohlprofil durch Innenhochdruckumformen umgeformt und anschließend ein Kunststoff angespritzt wird, wobei vor dem Anspritzen in einem Verbindungsbereich zwischen dem Hohlprofil und dem Kunststoff mittels Laser, Prägen oder Kerben Hinterschnitte aufweisende Vertiefungs- und/oder Erhöhungsstrukturelemente in Form von Rillierungen stochastisch über den Verbindungsbereich verteilt eingebracht werden
Ein aus der DE 10 2010 055 824 A1 ist schließlich ein Verfahren zur Herstellung eines Verbundteils bekannt, das durch einen Profilhohlkörper verstärkt ist, wobei folgende Verfahrensschritte durchzuführen sind:
1 .Bereitstellen eines Profilkörpers,
2 .Einbringen des Profilkörpers in eine Kavität eines Spritzgusswerkzeugs,
3 . Formen des Verbundbauteils durch Einspritzen von Kunststoffmaterial in die Kavität, wobei der Profilhohlkörper während des Einspritzens durch ein Verstärkungsmedium im Innenvolumen des Profilhohlkörpers gestützt wird,
4 . Aushärten des eingespritzten Kunststoffmaterials.

Der vorliegenden Erfindung liegt die neuartige Aufgabe zugrunde, ein Verfahren der eingangs erwähnten Art zur Verfügung zu stellen, mit dem ein hoch belastbares, robustes Kunststoff-Metall-Hybridbauteil herstellbar ist, das äußerst unkritisch bezüglich der Oberflächenreinheit des Metalls vor der Verarbeitung und hinsichtlich Belastungen durch Temperaturwechsel und Korrosion stabil ist. Insbesondere soll dafür gesorgt werden, dass zur Optimierung der Verbundfestigkeit des zu fügenden Kunststoff-Metall-Hybridbauteils beim Spritzguss der mindestens einen Kunststoffkomponente auf die aufgerauten Metalloberfläche ein vorzeitiges Einfrieren ersterer vermieden und eine maximale Haftungsstabilität der mindestens einen Kunststoffkomponente an der strukturierten Metalloberfläche gewährleistet wird.

Diese Aufgabe wird erfindungsgemäß durch die Gesamtheit der Merkmale des Verfahrens nach Patentanspruch 1 gelöst. Weiterbildungen des erfindungsgemäßen Verfahrens sind in den Unteransprüchen beschrieben
Gemäß der Erfindung werden zur Haftverbesserung von Metalloberfläche und mindestens einer Kunststoffkomponente in die Metalloberfläche zu deren Aufrauhung mittels Kurzpulslaserstrahlung makroskopische Hinterschnitte mit mikroskopischen Hinterschnitten mit stochastisch willkürlichen Rauheitsformen eingebracht, die jeweils in einem Spritzgussprozess mit der mindestens einen Kunststoffkomponente zumindest teilweise so gefüllt werden, dass eine Hinterkrallung letzterer in den makroskopischen und/oder mikroskopischen Hinterschnitten erfolgt, wobei anschließend an die Aufrauhung der Metalloberfläche vor und/oder während des Spritzgussprozesses der mindestens einen Kunststoffkomponente zumindest die aufgeraute Oberfläche des Metalls auf eine Temperatur erwärmt wird, die in der Verarbeitung im Bereich von der Raumtemperatur bis 100° über der Verarbeitungstemperatur der mindestens einen Kunststoffkomponente liegt.

Bevorzugt findet zur Erzeugung der makroskopischen Hinterschnitte der Metalloberfläche mittels der Kurzpulslaserstrahlung ein Scanner mit angepasster Brennweite der Scanneroptik und Strahlführung Verwendung. Der Scanner und die aufzurauenden Metalloberfläche können relativ zueinander mit einer vorgegebenen Geschwindigkeit kontinuierlich bewegt werden, wobei die Bewegung des Scanners mit einer Achsbewegung eines Roboters oder des Achssystems bzw. eines Koordinatensystems des zu bearbeitenden Objektes überlagert wird, so dass die Scanneroptik den Laserstrahl in einer Endlosschleife über die Metalloberfläche in seinem Arbeitsfeld führt und auf der gesamten Metalloberfläche eine gleichmäßige Strukturierung bei fortlaufender Relativbewegung erzeugt wird.

Bevorzugt liegt die Temperatur, auf die die aufgeraute Oberfläche des Metalls erwärmt wird, im Bereich von 100°C unter bis zur Verarbeitungstemperatur der mindestens einen Kunststoffkomponente.

Die Erwärmung der aufgerauten Metalloberfläche des Metalls kann auf eine Temperatur erfolgen, die höher als die Glasübergangstemperatur, bevorzugt im Bereich letzterer bei Thermoplasten liegt.

Vorzugsweise wird die Temperatur, auf die zumindest die aufgeraute Metalloberfläche des Metalls erwärmt wird, in Abhängigkeit von Parametern wie Prozessdauer, Viskosität der Schmelze und Feinheit und Tiefe der Strukturierung der Metalloberfläche gewählt.

Bei einer bevorzugten Ausführungsform des erfindungsgemäßen Verfahrens kann die Erwärmung des Metalls in einem Spritzgusswerkzeuges erfolgen, und zwar vorzugsweise induktiv. Durch eine induktive Erwärmung der Metallseite des Werkstoffverbundes im Spritzgusswerkzeug kann die Temperatur sehr genau geregelt werden und eine gleichmäßige Erwärmung der Metallseite des Werkstoffverbundes zur Gewährleistung einer maximalen Prozessstabilität erreicht werden.

Die Erwärmung der Metallseite des Werkstoffverbundes kann jedoch auch außerhalb des Spritzgusswerkzeuges z.B. in einem Ofen erfolgen, was den Einsatz eines wesentlich einfacheren Spritzgusswerkzeuges im erfindungsgemäßen Verfahren ermöglicht, voraus gesetzt, es wird eine zeitlich unmittelbare Abfolge der Verfahrensschritte realisiert. Der Einsatz eines vergleichsweise kostengünstigen Spritzgusswerkzeuges ist zudem bei Erwärmung der Metallseite des Werkstoffverbundes durch eine gezielt geführte Temperierung mittels Wasser, Öl oder Gas in einem IHU (Innenhochdruck) Verfahren möglich.

Die durch eine variable Temperierung zu erzielende Temperatur der Metallseite des Werkstoffverbundes ist von den Eigenschaften der gewählten Kunststoffkomponente abhängig. So kann bei der Verwendung von Duroplasten für die Kunststoffkomponente die Erwärmung zumindest der aufgerauten Metalloberfläche des Metalls bevorzugt auf eine Temperatur erfolgen, die oberhalb der Glasübergangstemperatur der Kunststoffkomponente und unterhalb des Maximums der Verarbeitungstemperatur der Kunststoffkomponente des Kunststoff-Metall-Hybridbauteils beim Spritzguss auf die aufgerauten Metalloberfläche liegt und die in Abhängigkeit von Prozessparametern wie Dauer des Spritzgusses, Viskosität der Schmelze und Feinheit und die Tiefe der Strukturierung der Metalloberfläche gewählt wird. Entscheidend ist, dass die Hinterschnitte der aufgerauten Metalloberfläche von der Kunststoffkomponente mindestens teilweise ausgefüllt werden.

Als Kunststoffkomponenten kommen sowohl thermoplastisch verarbeitbare Formmassen als auch nachträglich aushärtende Formmassen wie Duroplaste sowie auch Mehrkomponentensysteme zum Einsatz, die angepasst an die Anforderungen im jeweiligen Anwendungsumfeld des erfindungsgemäß hergestellten Kunststoff-Metall-Hybridbauteils hinsichtlich ihrer Art und Zusammensetzung modifiziert werden können. Eine niedrigere Viskosität einer polymeren Komponente bzw. eines entsprechenden Harzsystems erweist sich zum Füllen der Kavitäten der strukturierten Metalloberfläche als vorteilhaft.

Mögliche Modifikationen der Zusammensetzung der Polymerkomponenten beinhalten die chemische Struktur der Polymermoleküle. Als Thermoplaste werden bevorzugt thermoplastische Polymere wie Polyamide, Polyester, Polyacetale, Polybutyleterephthalat und Polyolefine wie Polypropylen oder Polyethylen oder Mischungen daraus oder Polyamide wie Polyamid 6 oder Polyamid 6.6 oder Polyphenylenoxid oder Polyetherimid gewählt. Teilkristallines Polyamid 66 hat sich aufgrund der Kombination von hoher Wärmeformbeständigkeit und Fließfähigkeit als vorteilhaft erwiesen.

Mögliche Kombinationen der Zusammensetzung der Kunststoffkomponente umfassen zudem sowohl den Bereich der Füll-und Verstärkungsstoffe, insbesondere faser- und plättchenartige Verstärkungsstoffe, als auch den Bereich zusätzlicher Additive, insbesondere hinsichtlich einer Haftungsmodifikation des Kunststoffes bzw. mindestens einer Kunststoffkomponente auf der strukturierten Metalloberfläche.

Im Bereich der Füll- und Verstärkungsstoffe sind insbesondere Komponenten vorteilhaft, die den Längenausdehnungskoeffizienten der Kunststoffkomponente verringern und durch einen Temperaturwechsel bedingte Spannungen im Grenzflächenbereich des Werkstoffverbundes verringern. Als Fasern zur Verstärkung der mindestens einen Kunststoffkomponente werden bevorzugt Glasfaser, Kohlenstofffaser oder Aramidfaser verwendet. In diesem Zusammenhang erweisen sich insbesondere polymerbasierte Verstärkungssysteme wie Aramidfasern als vorteilhaft, die einen entlang der Faserorientierung negativen, thermischen Ausdehnungskoeffizienten aufweisen.

Bei dem erfindungsgemäßen Verfahren können Kunststoffkomponenten ohne Verstärkungsfasern, mit verhältnismäßig kurzen Verstärkungsfasern, beispielsweise mit einer Faserlänge von weniger als 1 mm, bevorzugt weniger als 0,4 mm oder Kurzglasfasern vor dem Spritzgussprozess, und/oder mit verhältnismäßig langen Verstärkungsfasern, beispielsweise mit einer Faserlänge im Bereich von 1-30 mm vor dem Spritzgussprozess, zum Einsatz kommen. Hierbei können thermoplastische, duroplastische und elastomere Kunststoffe Verwendung finden, wobei vorzugsweise technische Kunststoffe wie Polypropylen oder Polyamid eingesetzt werden, die faserverstärkt sind.

Das Ausfüllen der Kavitäten der Strukturierung der Metalloberfläche im Spritzguss mit faserverstärktem Kunststoff gewährleistet eine hohe Tragfähigkeit des Werkstoffverbundes und überraschenderweise kann eine ausgezeichnete Hinterkrallung der insbesondere glasfaserverstärkten Kunststoffkomponente in den makroskopischen und/oder mikroskopischen Hinterschnitten der aufgerauten Metalloberfläche erreicht werden. Mittels eines teilvakuumierten Spritzgusswerkzeuges kann eine vollständige Ausfüllung der in die Metalloberfläche eingebrachten Kavitäten der Strukturierung der Metalloberfläche erreicht werden.

Bei Verwendung von Stahl als Metall und hochverstärktem thermoplastischem Kunststoff als Kunststoffkomponente, z.B. teilkristallinem Polyamid 66, wird die aufgeraute Stahloberfläche vor dem Spritzgussprozess mit dem hochverstärktem thermoplastischen Kunststoff auf eine Temperatur im Bereich von 100° C unter Massetemperatur bis Massetemperatur in der Verarbeitung erwärmt.

Vorzugsweise wird die mindestens eine Kunststoffkomponente vor dem Spritzguss mit Additiven zur Steigerung ihrer Haftungsfähigkeit an der aufgerauten und erwärmten Metalloberfläche versetzt.

Bevorzugt wird die Herstellung des Werkstoffverbundes des Kunststoff-Metall Hybridbauteils in Abhängigkeit von den Prozessparametern, Erwärmung zumindest der aufgerauten Oberfläche des Metalls auf eine Temperatur, Prozessdauer des Spritzgusses, Viskosität der Schmelze und Feinheit und Tiefe der Strukturierung der Metalloberfläche, numerisch simuliert.

Wird als Metall im Werkstoffverbund Aluminium verwendet und nach Aufrauhung der Aluminiumoberfläche die Aluminiumkomponente in einem kombinierten Innenhochdruck-Spritzgussprozess mit der mindestens einen Kunststoffkomponente innenhochdruckmäßig umgeformt, so kann die Umformwärme des Aluminiums für die Erwärmung der aufgerauten Aluminiumoberfläche im Spritzgussprozess mit der mindestens einen Kunststoffkomponenten genutzt werden.

Bevorzugt findet das erfindungsgemäße herstellbare Kunststoff-Metall-Hybridbauteil als Strukturbauteil mit verhältnismäßig hohem Leichtbaugrad im Automobilbau oder in der Fertigung anderer Verkehrsmittel oder für Elektronikgeräte Verwendung.

Wesentliche Vorteile der Erfindung bestehen in der Schaffung einer hochbelastbaren und robusten Verbindung zwischen Kunststoff und Metall, die äußerst unkritisch bezüglich der Oberflächenreinheit des Metalls vor der Verarbeitung ist. Der Werkstoffverbund zeigt sich äußerst stabil bei Temperaturwechseltests und Korrosionsprüfungen.

Durch eine induktive Erwärmung der Metallseite des Werkstoffverbundes im Spritzgusswerkzeug kann die Erwärmungstemperatur der Metalloberfläche sehr genau und gleichmäßig geregelt werden, wodurch eine hohe Prozessstabilität gewährleistet wird.

Zudem kann durch die Erwärmung der Metallseite des Werkstoffverbundes außerhalb des Spritzgusswerkzeuges dieses in einer wesentlich einfacheren Ausführungsform realisiert werden, vorausgesetzt die Verfahrensschritte des erfindungsgemäßen Verfahrens werden in zeitlich dichter Abfolge realisiert.

Außerdem sind gezielt angepasste Strukturen mit makroskopischer Aufrauhungstiefe im Bereich von 100 µm bis 1 mm mit stochastisch willkürlichen mikroskopischen

Rauheitsformen möglich, wodurch eine optimale Verklammerung von Kunststoff und Metall im nachfolgenden Spritzgussprozess gewährleistet ist.

Insbesondere wird durch das erfindungsgemäße Verfahren dafür gesorgt, dass zur Optimierung der Verbundfestigkeit des zu fügenden Kunststoff-Metall-Hybridbauteils im Spritzgussprozess mit der mindestens einen Kunststoffkomponente ein vorzeitiges Einfrieren dieser vermieden, ein zumindest teilweises Ausfüllen der Hinterschnitte bei ausgezeichneter
Hinterkrallung der mindestens einen Kunststoffkomponente in den makroskopischen und/oder mikroskopischen Hinterschnitten der aufgerauten Metalloberfläche erreicht und eine maximale Haftfestigkeit der mindestens einen Kunststoffkomponente an der strukturierten Metalloberfläche gewährleistet wird.

Mit dem erfindungsgemäßen Verfahren ist die Herstellung eines Werkstoffverbundes aus Metall und Kunststoff zu einem Kunststoff-Metall-Hybridbauteil gewährleistet, das bei einem Temperaturwechsel und/oder nach Korrosion weiterhin eine ausgezeichnete Haltbarkeit der Verbindung aufweist.

Die Erfindung wird nun unter Bezug auf die Figuren der Zeichnungen erläutert. In diesen sind:
**Fig. 1** eine mikroskopische Darstellung einer Strukturierung der Metalloberfläche eines ersten Metall-Polymer-Verbundes,
**Fig. 2** eine mikroskopische Darstellung einer Strukturierung der Metalloberfläche eines zweiten Metall-Polymer-Verbundes,
**Fig. 3** eine REM-Aufnahme der Strukturierung der Metalloberfläche,
**Fig. 4** eine schematische Darstellung einer Strukturierung der Metalloberfläche eines Aluminium-glasfaserverstärkten Polymer-Verbundes,
**Fig. 5** eine schematische Darstellung einer Strukturierung der Metalloberfläche eines Metall-glasfaserverstärkten Polyamid-Verbundes, wobei die nichtausgefüllten Bereiche gekennzeichnet sind,
**Fig. 6** eine schematische Darstellung einer Strukturierung der Metalloberfläche eines Stahl-glasfaserverstärkten Polyamid-Verbundes,
**Fig. 7** eine Aufnahme eines Testkörpers eines Kunststoff-Aluminium Hybridbauteils nach zerstörender Prüfung,
**Fig. 8** eine schematische Darstellung der Optik eines Scanners bei dessen Bewegung,
**Fig. 9** eine schematische Darstellung der Scannerbewegung im Arbeitsfeld, und
**Fig. 10** ein Fließbild einer Ausführungsform des erfindungsgemäßen Verfahrens, aus dem die Optimierung der Verbundfestigkeit des Kunststoff-Metall Hybridbauteils hervorgeht.

Die Erfindung wird nun unter Bezug auf die Figuren der Zeichnungen erläutert. In diesen sind:

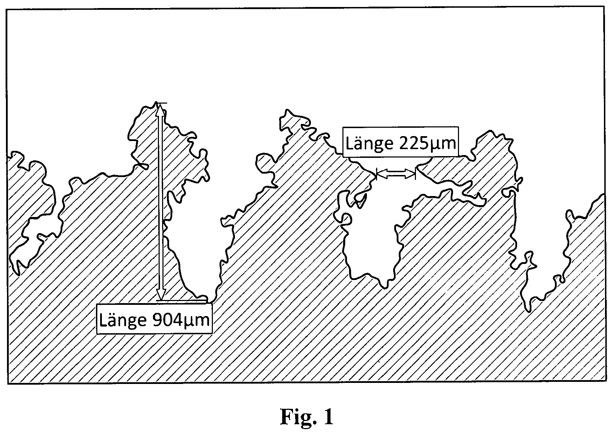

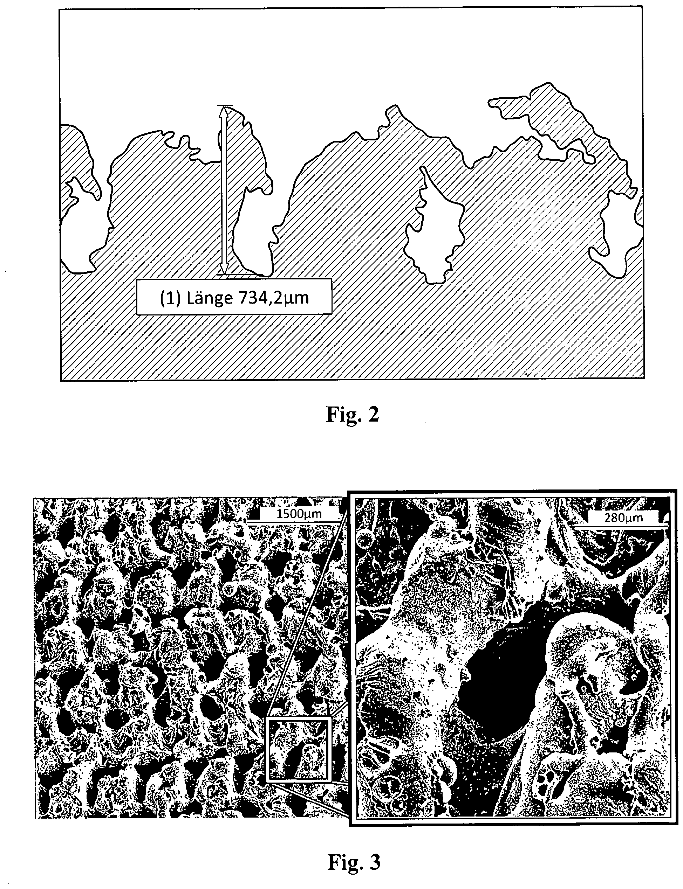

Die Figuren 1 und 2 zeigen jeweils eine mikroskopische Darstellung einer Laserstrukturierung der Metalloberfläche eines herzustellenden ersten bzw. zweiten Metall-Polymer-Verbundes mit jeweils variierenden Abständen und Tiefen der Laserstrukturierungen, die zur Vorbereitung der Fügefläche des jeweiligen Metall-Polymer-Verbundes erzeugt worden sind. Die Laserstrukturierung wird, wie eine REM-Aufnahme gemäß der Figur 3 zeigt, flächig auf die Metalloberfläche 3 zu deren Aufrauhung aufgebracht, wobei sich die Größe der Fläche nach den zu übertragenden Kräften des jeweiligen zu erzeugenden Metall-Polymer-Verbundes bemisst. Die Laserstrukturierung erfolgt mittels Kurzpulslaserstrahlung, wobei - wie den Figuren 1 bis 3 deutlich zu entnehmen ist - zur Aufrauhung der Metalloberfläche stochastisch willkürlich makroskopische und/oder mikroskopische Hinterschnitte in die Metalloberfläche eingebracht werden. Beim Fügen des Metall-Polymer-Verbundes in einem Spritzgussprozess werden die makroskopisch und/oder mikroskopischen Hinterschnitte mit der Polymerkomponente zumindest teilweise so gefüllt, dass eine Hinterkrallung letzterer in den makroskopischen und/oder mikroskopischen Hinterschnitten zur deutlichen Haftverbesserung der Metalloberfläche und der Polymerkomponente erfolgt.

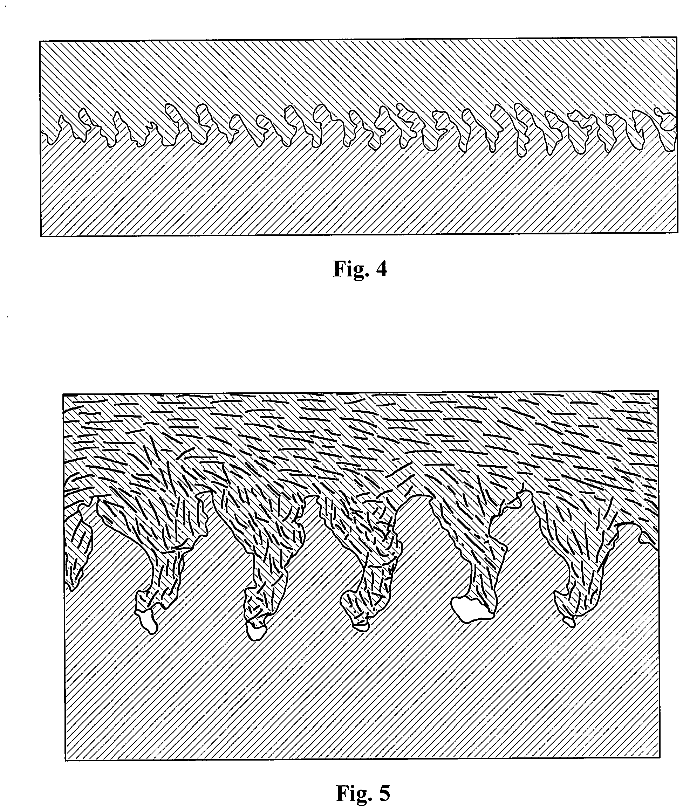

Aus Fig. 4 geht ein CT-Schnittbild der Fügefläche eines Aluminium-glasfaserverstärkten Polyamid-Verbundes hervor, wobei Aluminium mit der laserstrukturierten Oberfläche und den Hinterschnitten und die glasfaservderstärkte Polyamidmasse, von der die Hinterschnitte ausgefüllt sind, oben dargestellt sind. Da die Laserstrukturierungen der Aluminiumoberfläche während des Spritzgussprozesses nicht vollständig entlüftet werden können, verbleiben kleine unausgefüllte Reste (in der Darstellung dunkel zu erkennen), was jedoch durch den Einsatz eines teilvakuumierten Spritzgusswerkzeuges vermieden werden kann.

Fig. 5 zeigt ein Detailbild der Fügestelle eines Stahl- glasfaserverstärkten Polymid-Verbundes, wobei unten das Metall dunkel, oben das Polyamid mittelgrau, die Glasfasern in letzerem hellgrau und die nicht mit glasfaserverstärktem Polyamid ausgefüllten Bereiche des Metall- glasfaserverstärkten Polyamid-Verbundes weiß gekennzeichnet sind. Auch hier sind in die Metalloberfläche vor dem Fügen des Metall- glasfaserverstärkten Polyamid-Verbundes in einem Spritzgussprozess zu ihrer Aufrauhung mittels Kurzpulslaserstrahlung stochastisch willkürlich makroskopische und/oder mikroskopische Hinterschnitte eingebracht worden. Zur Verstärkung des Polyamids können kurze Glasfasern mit einer Länge von 1-2 mm vor dem Spritzgussprozess und/oder lange Glasfasern mit Längen bis 30mm mm vor dem Spritzgussprozess verwendet werden. Mit Hilfe eines teilvakuumierten Spritzgusswerkzeuges ist ein vollständiges Ausfüllen der Laserstrukturierung der aufgerauten Metalloberfläche mit dem glasfaserverstärkten Polyamid zu erreichen, so dass eine sehr hohe Tragfähigkeit des Metall- glasfaserverstärkten Polyamid-Verbundes gewährleistet wird.

Mit Hilfe eines teilvakuumierten Spritzgusswerkzeuges ist ein vollständiges Ausfüllen der Laserstrukturierung der aufgerauten Metalloberfläche mit dem glasfaserverstärkten Polyamid zu erreichen, so dass eine sehr hohe Tragfähigkeit des Metall-glasfaserverstärkten Polyamid-Verbundes gewährleistet wird.

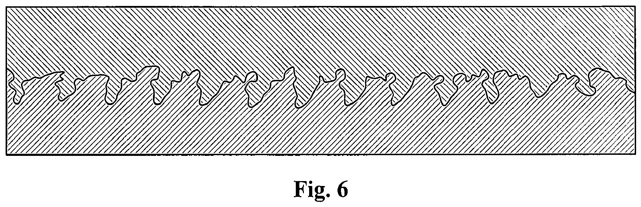

In ähnlicher Weise zeigt Fig. 6 ein Detailbild der Fügestelle eines Stahl-glasfaserverstärkten Polyamid-Verbundes, wobei Stahl unten und die glasfaserverstärkte Polyamidmasse oben gezeigt und die von letzterer ausgefüllten Hinterschnitte der laserstrukturierten Stahloberfläche dargestellt sind. Für das Ausfüllen der Hinterschnitte und der Kavitäten der laserstrukturierten Stahloberfläche im Spritzgussprozess ist es notwendig, ein vorzeitiges Einfrieren der Kunststoffmasse, insbesondere bei der Verwendung hochviskoser Kunststoffe zu verhindern. Es ist daher notwendig, die mittels Kurzpulslaserstrahlung aufgeraute Stahloberfläche vor dem Fügeprozess oder während des Fügeprozesses, z.B. durch Induktion zu erwärmen.

Zum Beispiel hat sich bei einer Kombination von Stahl mit hochverstärktem Polyamid 66 eine Temperatur des Stahls von ca. 250° C als sehr geeignet gezeigt, wobei je nach Typ des verwendeten Polyamids wie z.B. hochtemperaturgeeignet, crashfest, etc., die Temperatur ca. 50° C niedriger oder 30° C höher liegen kann.

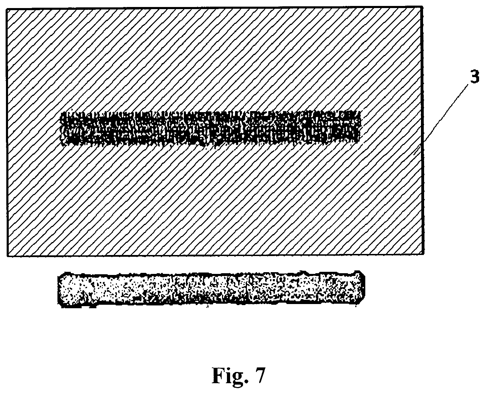

Fig. 7 zeigt eine Bildaufnahme eines Kunststoff-Metall-Hybridbauteils als Testkörper nach einer zerstörenden Prüfung, wobei auf einem Metallblech einer Größe von 40 mm x 70 mm die Fußbreite von 5 mm der Kunststoffkomponente zu erkennen ist. Soll z.B. ein innenhochdruckgeformtes Aluminium-Bauteil mit einer Kunststoffkomponente verbunden werden, so lässt sich bei einem integrierten Fügeprozess die Umformwärme des Aluminiums nutzen, so dass sich dessen zusätzliche Erwärmung vor dem Fügen erübrigt.

Im Zusammenhang mit dem Testkörper hat sich gezeigt, das Füll- und Verstärkungsstoffe der verwendeten Kunststoffkomponente, die durch Ihre Beschaffenheit in die Kavitäten der laserstrukturierten Metalloberfläche eindringen können, zu einer verbesserten Kraftübertragung in Grenzflächennähe des Verbundes beitragen können.

Um eine Korrosion der Fügestelle des Kunststoff-Metall-Hybridbauteils zu vermeiden, kann bei Einsatz eines Zweikomponenten-Spritzgussverfahrens zuerst ein die Fügestelle umfassender Rahmen aus elastomerem Material gespritzt werden, wonach direkt auf die laserstrukturierte Metalloberfläche der Fügestelle die thermoplastische oder duroplastische Komponente aufgebracht wird, durch die der tragfähige Verbund hergestellt wird. Alternativ kann auch der elastomere Rahmen im Anschluss an die Herstellung des Verbundes um diesen herum zur Abdichtung durch ein geeignetes Verfahren wie z.B. Spritzguss aufgebracht werden.

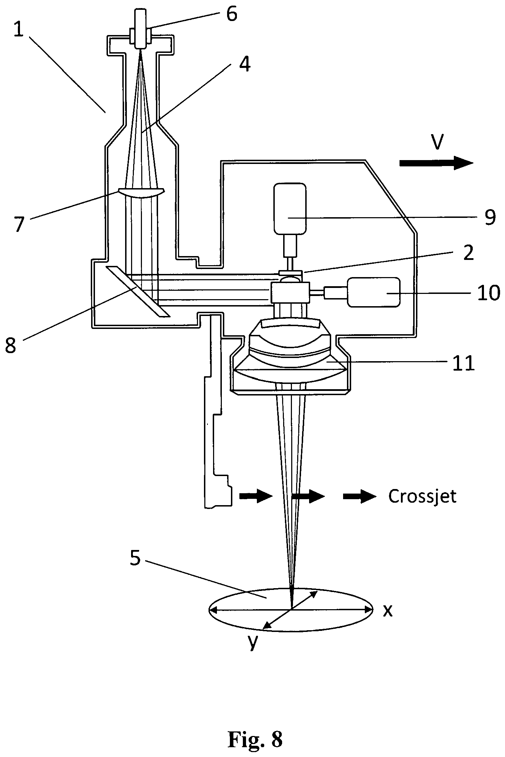

Aus Fig. 8 geht eine schematische Darstellung der Optik eines Scanners bei dessen Bewegung hervor, der mit angepasster Brennweite der Scanneroptik und Strahlführung zur stochastisch willkürlichen Einbringung der makroskopischen und/oder mikroskopischen Hinterschnitte in die Metalloberfläche zu deren Aufrauhung mittels Kurzpulslaserstrahlung Verwendung findet.

Der mechanische Aufbau der Scanneroptikl ist als solcher bekannt. Gemäß dem erfindungsgemäßen Verfahren wird der Scanner 2 relativ zur aufzurauenden Metalloberfläche 3 mit einer vorgegebenen Geschwindigkeit (Pfeil v) kontinuierlich bewegt, wobei gleichzeitig seine Bewegung mit einer Achsbewegung eines nicht gezeigten Roboters überlagert wird. Die Scanneroptikl führt den Laserstrahl 4 in einer Endlosschleife über die Metalloberfläche in seinem Arbeitsfeld (x, y) 5, wobei auf der gesamten zu strukturierenden Metalloberfläche eine gleichmäßige stochastische Aufrauhung (Strukturierung) bei fortlaufender Relativbewegung endlos erzeugt wird.

Wie aus Fig. 8 zu ersehen ist, wird ein von einem Laserlichtkabel 6 der Scanneroptikl ausgehender Laserstrahl 4 über einen Kollimator 7, der Laseroptik und einem diesem in Strahlrichtung nachgeordneten Umlenkspiegel 8 zu einem X-Achsen-Scanner 9 und einem y-Achsen-Scanner 10 aufweisendes Galvanometerscannersystem geführt und von diesem über ein in Strahlführung nachgeordnetes Planfeldobjektiv 11 auf das Arbeitsfeld der zu strukturierenden Metalloberfläche abgelenkt. Bei Installierung der Scanneroptik 1 an einem Roboterarm kann die aufzurauende Fügefläche mit Hilfe einer Abstandsregelung abgefahren werden.

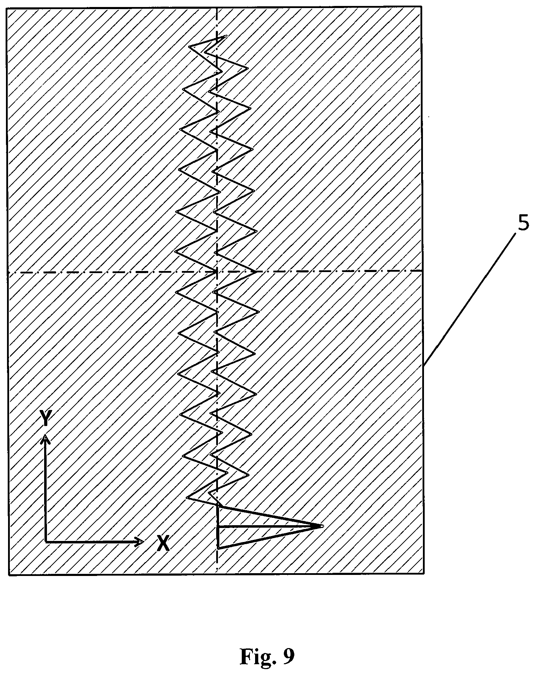

Fig. 9 verdeutlicht, dass die Scanneroptik eine vorgegebene Relativbewegung zu der zu strukturierenden Werkstückoberfläche ausführt, wobei, wie aus Fig. 9 hervorgeht, die Scanneroptik den Laserstrahl in einer Endlosschleife über eine geschlossene Struktur der Werkstückoberfläche in seinem Arbeitsfeld (x, y) führt. Durch die Überlagerung der beiden Bewegungen können gezielte stochastische Strukturformen der zu strukturierenden Metalloberfläche, die an die spätere Belastungsrichtung angepasst sind, mit unterschiedlichen Tiefen erzeugt werden. Die Form und die Tiefe der erzeugten Laserstrukturierung kann durch Veränderung der Führung (Form) und/oder Geschwindigkeit der Strahlbewegung und gleichzeitige Anpassung der Laserparameter wie z.B. Leistung und/oder Repetitionsrate definiert werden. Tiefen der Strukturierung von einigen 100 µm bis 1 mm sind möglich. Die Anpassung des Spritzgussprozesses an die Beschaffenheit des Fügepartners sowie das vorgegeben Belastungsprofil ist somit möglich.

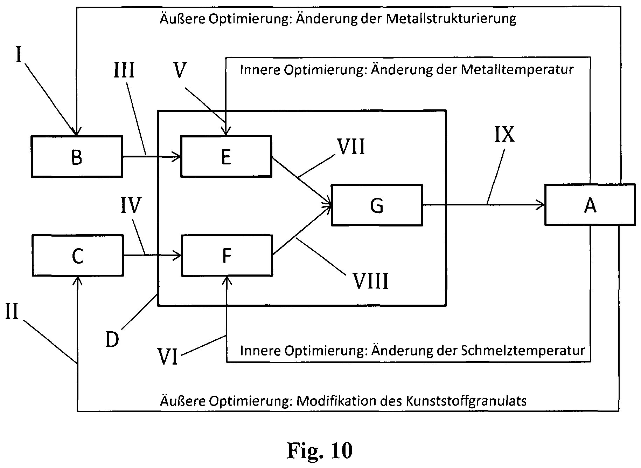

Fig. 10 veranschaulicht die Möglichkeiten einer Optimierung der Verbundfestigkeit eines erfindungsgemäß herzustellenden Werkstoffverbundes aus Metall und Kunststoff zu einem Kunststoff-Metall-Hybridbauteil. Entsprechend Testvorgaben einer Teststation (BlockA) des herzustellenden Werkstoffverbundes ist eine Änderung der Metallstrukturierung (Block B) wie auch eine Modifikation des verwendeten Kunststoffgranulats (Block C) des jeweils entsprechenden Fügepartners, Metall bzw. Kunststoffkomponente im Wege einer jeweiligen sogenannten äußeren Optimierung (Richtungspfeil I bzw. II) möglich. Weiterhin ist entsprechend den Testvorgaben des herzustellenden Werkstückverbundes (Block A) nach Einbringung (Richtungspfeil III) der Metallkomponente mit laserstrukturierter Oberfläche (Block B) in ein Spritzgusswerkzeug (Block D) zu dessen Erwärmung (Block E) innerhalb des letzteren sowie nach Einbringung (Richtungspfeil IV) des Kunststoffgranulats (Block C) in das Spritzgusswerkzeug (Block D) zwecks Herstellung einer Schmelze (Block F) des Kunststoffgranulats vor dem Fügen der beiden Fügepartner in einem Spritzgussprozess (Block G) eine Änderung der Metalltemperatur (Richtungspfeil V) bzw. eine Änderung der Schmelztemperatur (Richtungspfeil VI) im Wege einer jeweiligen inneren entsprechenden Optimierung möglich, so dass der Spritzgussprozess (Block G) nach Eingabe optimierter Werte aus der Erwärmung der Metallkomponente (Richtungspfeil VII) bzw. aus der Schmelze der Kunststoffkomponente (Richtungspfeil VIII)eingeleitet und der Werkstoffverbund mit optimierter Verbundfestigkeit erzeugt wird, der aus dem Spritzgusswerkzeug (Block D) entnommen und wiederum der Teststation (Block A) zugeführt wird (Richtungspfeil IX).

### Liste der Bezugszeichen

- 1: Scanneroptik
- 2: Scanner, Galvanometerscanner
- 3: aufzurauende Metalloberfläche
- 4: Laserstrahl
- 5: Arbeitsfeld der Scanneroptik
- 6: Laserlichtkabel
- 7: Kollimator
- 8: Umlenkspiegel
- 9: X-Achsen-Scanner
- 10: Y-Achsenscanner
- 11: Planfeldobjektiv
- v: Pfeil für die Geschwindigkeit des Scanners
- Block A: Teststation des herzustellenden Werkstückverbundes
- Block B: Änderung der Metallstrukturierung
- Block C: Änderung des Kunststoffgranulats
- Block D: Spritzgusswerkzeug
- Block E: Erwärmung
- Block F: Schmelze
- Block G: Spritzgussprozess
- Pfeil I: äußere Optimierung der Änderung der Metallstrukturierung
- Pfeil II: äußere Optimierung der Änderung des Kunststoffgranulats
- Pfeil III: Einbringung der Metallkomponente mit laserstrukturierter Oberfläche in das Spritzgusswerkzeug
- Pfeil IV: Einbringung des Kunststoffgranulats in das Spritzgusswerkzeug
- Pfeil V: Änderung der Metalltemperatur
- Pfeil VI: Änderung der Schmelztemperatur
- Pfeil VII: innere Optimierung der Erwärmung der Metallkomponente
- Pfeil VIII: innere Optimierung der Änderung der Schmelztemperatur
- Pfeil IX: Zuführung des Werkstoffverbundes zur Teststation A

## Patentansprüche

1. Verfahren zum Herstellen eines Werkstoffverbundes aus Metall und Kunststoff zu einem Kunststoff-Metall-Hybridbauteil, bei dem zur Haftverbesserung von Metalloberfläche und mindestens einer Kunststoffkomponente in die Metalloberfläche zu deren Aufrauhung mittels Kurzpulslaserstrahlung makroskopische Hinterschnitte mit mikroskopischen Hinterschnitten mit stochastisch willkürlichen Rauheitsformen eingebracht werden, die jeweils in einem Spritzgussprozess mit der mindestens einen Kunststoffkomponente zumindest teilweise so gefüllt werden, dass eine Hinterkrallung letzterer in den makroskopischen und/oder mikroskopischen Hinterschnitten erfolgt, wobei anschließend an die Aufrauhung der Metalloberfläche vor und/oder während des Spritzgussprozesses der mindestens einen Kunststoffkomponente zumindest die aufgeraute Oberfläche des Metalls auf eine Temperatur erwärmt wird, die in der Verarbeitung im Bereich von der Raumtemperatur bis 100° C über der Verarbeitungstemperatur der mindestens einen Kunststoffkomponente liegt.

2. Verfahren nach Patentanspruch 1, **dadurch gekennzeichnet, dass** die Temperatur, auf die die aufgeraute Oberfläche des Metalls erwärmt wird, im Bereich von 100°C unter bis zur Verarbeitungstemperatur der mindestens einen Kunststoffkomponente liegt.

3. Verfahren nach Anspruch 1 oder 2, **dadurch gekennzeichnet, dass** die Erwärmung der aufgerauten Oberfläche des Metalls auf eine Temperatur erfolgt, die höher als die Glasübergangstemperatur, bevorzugt im Bereich letzterer bei Thermoplasten liegt.

4. Verfahren nach einem der vorhergehenden Ansprüche, **dadurch gekennzeichnet, dass** die Temperatur, auf die zumindest die aufgerauten Metalloberflächen des Metalls erwärmt werden, in Abhängigkeit von Prozessparametern wie Prozessdauer, Viskosität der Schmelze und Feinheit und die Tiefe der aufgerauten Strukturierung der Metalloberflächen gewählt wird.

5. Verfahren nach einem der vorhergehenden Ansprüche, **dadurch gekennzeichnet, dass** zur Erzeugung der makroskopischen Hinterschnitte der Metalloberfläche mittels der Kurzpulslaserstrahlung ein Scanner mit angepasster Brennweite der Scanneroptik und Strahlführung Verwendung findet, wobei der Scanner relativ zur aufzurauenden Metalloberfläche mit einer vorgegebenen Geschwindigkeit kontinuierlich bewegt und seine Bewegung mit einer Achsbewegung eines Roboters überlagert wird, die Scanneroptik gleichzeitig den Laserstrahl in einer Endlosschleife über die Metalloberfläche in seinem Arbeitsfeld führt und auf der gesamten Metalloberfläche eine gleichmäßiger Strukturierung bei fortlaufender Relativbewegung endlos erzeugt wird.

6. Verfahren nach einem der vorhergehenden Ansprüche, **dadurch gekennzeichnet, dass** die Erwärmung des Metalls innerhalb des Spritzgusswerkzeuges oder außerhalb des letzteren in einem Ofen erfolgt.

7. Verfahren nach einem der vorhergehenden Ansprüche, **dadurch gekennzeichnet, dass** die Erwärmung des Metalls induktiv oder durch variable Temperierung oder durch Wasser, Öl oder Gas in einem Innenhochdruckformprozess erfolgt.

8. Verfahren nach einem der vorhergehenden Ansprüche, **dadurch gekennzeichnet, dass** für die mindesten eine Kunststoffkomponente Thermoplaste wie thermoplastische Polymere wie Polyamide, Polyester, Polyacetale, Polybutyleterephthalat und Polyolefine wie Polypropylen oder Polyethylen oder Mischungen daraus oder Polyamide wie Polyamid 6 oder Polyamid 6.6 oder Polyphenylenoxid oder Polyetherimid verwendet werden.

9. Verfahren nach einem der Patentansprüche 1-7, **dadurch gekennzeichnet, dass** für die mindestens eine Kunststoffkomponente Duroplaste oder Elastomere oder Elastomerartige verwendet werden

10. Verfahren nach einem der vorhergehenden Ansprüche, **dadurch gekennzeichnet, dass** der Spritzgussprozess mit der mindestens einen Kunststoffkomponente unter wenigstens teilweisem Vakuum erfolgt.

11. Verfahren nach einem der vorhergehenden Ansprüche, **dadurch gekennzeichnet, dass** die mindestens eine Kunststoffkomponente mit Füll- und Verstärkungsstoffen compoundiert wird, die den Längenausdehnungskoeffizienten der mindestens einen Kunststoffkomponente herabsetzen.

12. Verfahren nach Anspruch 11, **dadurch gekennzeichnet, dass** als Fasern zur Verstärkung der mindestens einen Kunststoffkomponente Glasfasern, Kohlenstofffasern, Aramidfasern oder Naturfasern aus Flachs, Hanf oder Sisal, oder Fasern mit einer Faserlänge von weniger als 1 mm oder von weniger als 0,4 mm oder Kurzglasfasern oder Fasern mit einer Fasernlänge im Bereich von 1 mm bis 30 mm oder Langglasfasern verwendet werden.

13. Verfahren nach Anspruch 11 oder 12, **dadurch gekennzeichnet, dass** als Verstärkungsstoffe polymerbasierte Verstärkungssysteme wie Aramidfasern verwendet werden, die einen entlang der Faserorientierung negativen, thermischen Ausdehnungskoeffizienten aufweisen.

14. Verfahren nach Anspruch 7 bis 13, **dadurch gekennzeichnet, dass** bei Verwendung von Stahl, Aluminium oder andere Metalle und hochverstärktem thermoplastischem Kunststoff als Kunststoffkomponente die aufgeraute Stahloberfläche vor dem Spritzgussprozess mit dem hochverstärktem thermoplastischen Kunststoff auf eine Temperatur im Bereich von 100° C unter bis Massetemperatur in der Verarbeitung erwärmt wird.

15. Verfahren nach einem der Ansprüche 1 bis 14, **dadurch gekennzeichnet, dass** als Metall des Werkstoffverbundes ein Aluminiumwerkstück verwendet wird, wobei nach Aufrauhung der Aluminiumoberfläche das Aluminiumwerkstück vor dem Spritzgießen mit der mindestens einen Kunststoffkomponente innenhochdruckmäßig zu einem Aluminium-Bauteil umgeformt wird und die entstehende Umformwärme des Aluminiums für die Erwärmung der aufgerauten Aluminiumoberfläche für den unmittelbar im gleichen Werkzeug stattfindenden Spritzgussprozess mit der mindestens einen Kunststoffkomponenten genutzt wird.

## Claims

1. Method for producing a material composite composed of metal and plastic to form a plastic-metal hybrid component, in which method macroscopic undercuts having microscopic undercuts with stochastically random roughness forms are created in the metal surface by means of short-pulse laser radiation to roughen it, in order to improve adhesion between the metal surface and at least one plastic component, said undercuts each being at least partially filled with the at least one plastic component in an injection moulding process in such manner that said plastic component engages in the macroscopic and/or microscopic undercuts in the manner of a claw, wherein, following the roughening of the metal surface at least the roughened surface of the metal is heated to a temperature which, during processing, lies in the range of room temperature up to 100 °C above the processing temperature of the at least one plastic component before and/or during the injection moulding process of the at least one plastic component.

2. Method according to Claim 1, **characterized in that** the temperature to which the roughened surface of the metal is heated lies in the range from 100 °C below the processing temperature of the at least one plastic component up to said processing temperature.

3. Method according to Claim 1 or 2, **characterized in that** the roughened surface of the metal is heated to a temperature which is higher than the glass transition temperature, preferably in the range of the glass transition temperature for thermoplastics.

4. Method according to any one of the preceding claims, **characterized in that** the temperature to which at least the roughened metal surfaces are heated is selected depending on process parameters such as process duration, melt viscosity and fineness, and the depth of roughened structuring of the metal surfaces.

5. Method according to any one of the preceding claims, **characterized in that** a scanner with adjusted focal length of the scanner optics and beam guidance is used for generating the macroscopic undercuts in the metal surface by means of the short-pulse laser radiation, wherein the scanner is moved continuously at a predetermined speed relative to the metal surface to be roughened, and an axis motion of a robot is superimposed on the movement thereof, the optical scanner simultaneously scans the laser beam in a continuous loop over the metal surface in its field of work and a uniform structuring is produced endlessly on the entire metal surface during continuous relative movement.

6. Method according to any one of the preceding claims, **characterized in that** the heating of the metal is carried out within the injection moulding tool or externally thereto, in an oven.

7. Method according to any one of the preceding claims, **characterized in that** the heating of the metal takes place inductively or by variable temperature control or by water, oil or gas in an internal high pressure moulding process.

8. Method according to any one of the preceding claims, **characterized in that** thermoplastics such as thermoplastic polymers such as polyamides, polyesters, polyacetals, polybutylene terephthalate and polyolefins such as polypropylene or polyethylene or mixtures thereof or polyamides such as polyamide 6 or polyamide 6.6 or polyphenylene oxide or polyetherimide are used for the at least one plastic component.

9. Method according to any one of Claims 1-7, **characterized in that** thermosets or elastomers or elastomer-like substances are used for the at least one plastic component.

10. Method according to any one of the preceding claims, **characterized in that** the injection moulding process takes place with the at least one plastic component under at least partial vacuum.

11. Method according to any one of the preceding claims, **characterized in that** the at least one plastic component is compounded with fillers and reinforcing materials, which reduce the coefficient of linear expansion of the at least one plastic component.

12. Method according to Claim 11, **characterized in that** glass fibres, carbon fibres, aramid fibres or natural fibres of flax, hemp or sisal, or fibres having a fibre length of less than 1 mm or less than 0.4 mm or short glass fibres or fibres having a fibre length in the range from 1 mm to 30 mm or long glass fibres are used as fibres for reinforcing the at least one plastic component.

13. Method according to Claim 11 or 12, **characterized in that** polymer-based reinforcing systems such as aramid fibres which have a negative coefficient of thermal expansion along the fibre orientation are used as reinforcing materials.

14. Method according to any of Claims 7 to 13, **characterized in that** when steel, aluminium or other metals and super-strengthened thermoplastic material are used as the plastic component, before the injection moulding process with the super-strengthened thermoplastic material the roughened steel surface is heated during processing to a temperature in the range from 100 °C below the mass temperature to the mass temperature.

15. Method according to any one of Claims 1 to 14, **characterized in that** an aluminium workpiece is used as the metal of the material composite, wherein the aluminium workpiece is reshaped into an aluminium component by internal high pressure means after roughening of the aluminium surface and before the injection moulding with the at least one plastic component, and the resulting heat of deformation of the aluminium is used to heat the roughened aluminium surface for the injection moulding process with the at least one plastic component which takes place immediately in the same tool.

## Revendications

1. Procédé, destiné à créer un composite de matières constitué de métal et de matière plastique en un composant hybride de matière plastique/et métal, lors duquel, pour améliorer l'adhérence de la surface métallique et d'au moins un composant en matière plastique, on ménage dans la surface métallique, pour la rendre rugueuse, au moyen de rayonnement laser à impulsions courtes des contre-dépouilles macroscopiques avec des contre-dépouilles microscopiques possédant des formes de rugosités stochastiquement aléatoires, que l'on remplit respectivement au moins en partie lors d'un processus de moulage par injection de l'au moins un composant, de sorte à donner lieu à un rétro-engagement de ce dernier dans les contre-dépouilles macroscopiques et/ou microscopiques, à la suite de la création de la rugosité de la surface métallique, avant et/ou pendant le processus de moulage par injection de l'au moins un composant en matière plastique, au moins la surface rendue rugueuse du métal étant chauffée à une température qui lors de la mise en oeuvre si situe dans l'ordre de la température ambiante jusqu'à supérieure de 100 °C à la température de mise en œuvre de l'au moins un composant en matière plastique.

2. Procédé selon la revendication 1, **caractérisé en ce que** la température à laquelle on chauffe la surface rendue rugueuse du métal se situe dans l'ordre inférieur à 100 °C jusqu'à la température de mise en œuvre de l'au moins un composant en matière plastique.

3. Procédé selon la revendication 1 ou 2, **caractérisé en ce que** l'échauffement de la surface rendue rugueuse du métal s'effectue à une température qui est supérieure à la température de vitrification, se situe de préférence dans l'ordre de celle-ci pour des matières thermoplastiques.

4. Procédé selon l'une quelconque des revendications précédentes, **caractérisé en ce que** la température à laquelle on chauffe au moins les surfaces rendues rugueuses du métal est sélectionnée en fonction de paramètres du processus, tels que la durée du processus, la viscosité de la masse fondue et la finesse et la profondeur de la structuration rendue rugueuse des surfaces métalliques.

5. Procédé selon l'une quelconque des revendications précédentes, **caractérisé en ce que** pour générer les contre-dépouilles macroscopiques de la surface métallique au moyen du rayonnement laser à impulsions courtes, il est utilisé un scanner à distance focale adaptée de l'optique du scanner et à guidage du faisceau, le scanner étant déplacé en continu, à une vitesse prédéfinie par rapport à la surface métallique qui doit être rendue rugueuse et à son déplacement étant superposé un déplacement d'axe d'un robot, l'optique du scanner guidant simultanément le faisceau laser dans une boucle infinie sur la surface métallique dans son champ de travail et sur l'ensemble de la surface métallique étant générée en continu une structuration régulière lors d'un déplacement relatif continu.

6. Procédé selon l'une quelconque des revendications précédentes, **caractérisé en ce que** l'échauffement du métal à l'intérieur de l'outil de moulage par injection ou à l'extérieur de celui-ci a lieu dans un four.

7. Procédé selon l'une quelconque des revendications précédentes, **caractérisé en ce que** l'échauffement du métal a lieu par induction ou par mise en température variable ou par eau, par huile ou par gaz, lors d'un processus de formage par haute pression interne.

8. Procédé selon l'une quelconque des revendications précédentes, **caractérisé en ce que** pour l'au moins un composant en matière plastique, on utilise des matières thermoplastiques telles que des polymères thermoplastiques comme les polyamides, les polyesters, les polyacétales, le polytéréphtalate de butylène et les polyoléfines, comme le polypropylène ou le polyéthylène ou leurs mélanges ou des polyamides, comme le polyamide 6 ou le polyamide 6.6 ou du polyoxyde de phénylène ou le polyétherimide.

9. Procédé selon l'une quelconque des revendications 1 à 7, **caractérisé en ce que** pour l'au moins un composant en matière plastique, on utilise des plastiques thermodurcissables ou des élastomères ou des matières de types élastomères.

10. Procédé selon l'une quelconque des revendications précédentes, **caractérisé en ce que** le processus de moulage par injection avec l'au moins un composant en matière plastique a lieu sous vide au moins partiel.

11. Procédé selon l'une quelconque des revendications précédentes, **caractérisé en ce qu'**on mélange l'au moins un composant en matière plastique avec des agents de charge et des agents renforçateurs, qui abaissent le coefficient de dilatation longitudinale de l'au moins un composant en matière plastique.

12. Procédé selon la revendication 11, **caractérisé en ce qu'**on utilise en tant que fibres de renfort de l'au moins un composant en matière plastique des fibres de verre, des fibres de carbone, des fibres d'aramide ou des fibres naturelles en lin, en chanvre ou en sisal, ou des fibres d'une longueur de fibres inférieure à 1 mm ou inférieure à 0,4 mm ou des fibres de verre courtes ou des fibres d'une longueur de fibres de l'ordre de 1 mm à 30 mm ou des fibres de verre longues.

13. Procédé selon la revendication 11 ou 12, **caractérisé en ce qu'**on utilise en tant qu'agents de renfort des systèmes renforçateurs à base de polymères, tels que des fibres d'aramide, qui font preuve d'un coefficient de dilatation thermique négatif, le long de l'orientation des fibres.

14. Procédé selon la revendication 7 à 13, **caractérisé en ce que** dans le cas de l'utilisation d'acier, d'aluminium ou d'autres métaux et d'une matière thermoplastique hautement renforcée en tant que composant en matière plastique, avant le processus de moulage par injection, on chauffe la surface en acier rendue rugueuse avec la matière thermoplastique hautement renforcée à une température de l'ordre de 100 °C inférieure jusqu'à la température de masse lors de la mise en œuvre.

15. Procédé selon l'une quelconque des revendications 1 à 14, **caractérisé en ce qu'**on utilise en tant que métal pour le composite de matières une pièce à usiner en aluminium, après création de la rugosité de la surface de l'aluminium, la pièce à usiner en aluminium étant déformée avant le moulage par injection avec l'au moins un composant en matière plastique par haute pression interne en un élément structurel en aluminium, et la chaleur de déformation produite de l'aluminium étant utilisée pour chauffer la surface de l'aluminium rendue rugueuse, pour le processus de moulage par injection qui a lieu directement dans le même outil avec l'au moins un composant en matière plastique.
